# EUROPEAN PATENT APPLICATION

(11) **EP 4 517 993 A1**
(43) Date of publication of application: **05.03.2025**
(21) Application number: 23909190.3
(22) Date of filing: 15.08.2023
(51) Int. Cl.: H01M 50/414, H01M 50/489, H01M 10/054

(54) **SODIUM ION BATTERY, BATTERY AND ELECTRIC DEVICE**

(30) Priority: 26.12.2022 CN 202211676739
(71) Applicant: Contemporary Amperex Technology Co., Limited, Ningde, Fujian 352100 (CN)
(72) Inventor: CHEN, Jiahua, Ningde, Fujian 352100 (CN); YE, Yonghuang, Ningde, Fujian 352100 (CN); JIN, Haizu, Ningde, Fujian 352100 (CN)
(74) Representative: Ran, Handong
(86) International application number: PCT/CN2023/113023
(87) International publication number: WO 2024/139249

(57) **Abstract**

The present application relates to a sodium ion battery, a battery and an electric device. The sodium ion battery comprises a positive electrode sheet, a negative electrode sheet and an ion conductor; the ion conductor is located between the positive electrode sheet and the negative electrode sheet; the ion conductor is at least in contact with the surface of the negative electrode sheet; the ion conductor is configured to transmit sodium ions between the positive electrode sheet and the negative electrode sheet, and the sodium ions transmitted to the surface of the negative electrode sheet are reduced into sodium metal, wherein the elastic modulus of the ion conductor is E, the unit of the ion conductor is GPa, and 0.1 ≤ E ≤ 5.0. According to the present application, the safety performance of the sodium ion battery can be improved.

## Description

### CROSS-REFERENCE TO RELATED APPLICATIONS

This application claims priority to Chinese Patent Application No. 202211676739.5, filed on December 26, 2022 and entitled "SODIUM-ION BATTERY, BATTERY, AND ELECTRIC APPARATUS", which is incorporated herein by reference in its entirety.

### TECHNICAL FIELD

This application relates to the field of battery technologies, and more specifically, to a sodium-ion battery, a battery, and an electric apparatus.

### BACKGROUND

Due to advantages such as reliable operating performance, no pollution, and no memory effect, sodium-ion batteries have been widely used. For example, as environmental protection issues gain increasing attention and new energy vehicles become more prevalent, the demands for power-type sodium-ion batteries are in explosive growth.

With the development of the battery field, the requirements for the electrochemical performance of sodium-ion batteries are gradually increased. While the electrochemical performance of sodium-ion batteries is improved, how the safety performance of sodium-ion batteries is further improved is an urgent problem to be solved currently.

### SUMMARY

This application provides a sodium-ion battery, a battery, and an electric apparatus. This application can improve safety performance of the sodium-ion battery.

According to a first aspect, this application provides a sodium-ion battery. The sodium-ion battery includes a positive electrode plate, a negative electrode plate, and an ion conductor. The ion conductor is located between the positive electrode plate and the negative electrode plate. The ion conductor is at least in contact with a surface of the negative electrode plate, the ion conductor is configured to conduct sodium ions between the positive electrode plate and the negative electrode plate, and sodium ions conducted to the surface of the negative electrode plate are reduced to sodium metal, where an elastic modulus of the ion conductor is E in GPa, where 0.10 ≤ E ≤ 5.00.

Therefore, the ion conductor of this application can isolate the positive electrode plate from the negative electrode plate, and can conduct sodium ions. Moreover, the ion conductor provides conduction paths for sodium ions, sodium ions migrate to the surface of the negative electrode plate through the ion conductor and gain electrons to become metal, and the range of sodium ions precipitated corresponds to the range of the ion conductor, such that the sodium metal is less likely to be precipitated to an end portion of the negative electrode plate in a height direction, such as the negative electrode plate, thereby reducing the risk of short circuit caused by contact between the negative electrode plate and the positive electrode plate. In addition, the ion conductor has excellent elasticity, which allows it to deform correspondingly in regions with increased precipitated sodium metal, reduces the risk of the sodium metal being squeezed out, and reduces the risk of short circuit caused by contact between the squeezed-out sodium metal and the positive electrode plate, thereby improving safety performance of the sodium-ion battery.

In some embodiments, 1.00 ≤ E ≤ 5.00. The ion conductor includes a solid electrolyte. The solid electrolyte can provide migration paths for sodium ions, and when the solid electrolyte satisfies the foregoing elastic modulus range, its elasticity is more excellent, which facilitates deformation, reduces the risk of the sodium metal being squeezed out, and reduces the risk of short circuit caused by contact between the squeezed-out sodium metal and the positive electrode plate, thereby improving the safety performance of the sodium-ion battery.

In some embodiments, the ion conductor includes a continuously disposed matrix, and material of the matrix includes one or more of polyether compound, polyacrylonitrile, polyacrylate compound, and fluoropolymer.

In some embodiments, the polyether compound includes one or more of polyethylene oxide and polypropylene oxide.

In some embodiments, the polyacrylate compound includes one or more of polymethacrylate, polyethyl acrylate, and polyhydroxymethacrylate.

In some embodiments, the fluoropolymer includes polyvinylidene fluoride.

In some embodiments, 0.10 ≤ E ≤ 2.00. The ion conductor includes a gel electrolyte. The gel electrolyte can provide migration paths for sodium ions, and when the solid electrolyte satisfies the foregoing elastic modulus range, its elasticity is more excellent, which facilitates deformation, reduces the risk of the sodium metal being squeezed out, and reduces the risk of short circuit caused by contact between the squeezed-out sodium metal and the positive electrode plate, thereby improving the safety performance of the sodium-ion battery.

In some embodiments, the ion conductor includes a continuously disposed matrix and a plasticizer located in the matrix.

In some embodiments, material of the matrix includes one or more of polyether compound, polyacrylonitrile, polyacrylate compound, and fluoropolymer.

In some embodiments, the polyether compound includes one or more of polyethylene oxide and polypropylene oxide.

In some embodiments, the polyacrylate compound includes one or more of polymethacrylate, polyethyl acrylate, and polyhydroxymethacrylate.

In some embodiments, the fluoropolymer includes one or more of polyvinylidene fluoride and vinylidene fluoride-hexafluoropropylene copolymer.

In some embodiments, the plasticizer includes one or more of dimethylformamide, diethyl carbonate, γ-butyrolactone, ethylene carbonate, propylene carbonate, and polyethylene glycol.

In some embodiments, the ion conductor includes a supporting layer and a conducting layer, the conducting layer is located on a surface of the supporting layer, and the conducting layer is disposed on the surface of the negative electrode plate; where an elastic modulus of the conducting layer is E₁ in GPa, and an elastic modulus of the supporting layer is E₂ in GPa; where E₁/E₂ < 1. The supporting layer has good mechanical performance, providing good support, and plays the role of insulation to isolate the positive electrode plate from the negative electrode plate and alleviate swelling. The conducting layer can conduct sodium ions, acting similarly to an electrolyte.

In some embodiments, 0.10 ≤ E₁ ≤ 2.00.

In some embodiments, the conducting layer includes a polymer matrix; and further optionally, the polymer matrix includes one or more of polyether compound, polyacrylonitrile, polyacrylate compound, and fluoropolymer.

In some embodiments, 0.50 ≤ E₂ ≤ 6.00. Optionally, 0.50 ≤ E₂ ≤ 3.00.

Optionally, material of the supporting layer includes one or more of polyolefin-based resin film, glass fiber, and non-woven fabric.

In some embodiments, the sodium-ion battery further includes an insulating structure, the insulating structure is disposed on at least one side of the ion conductor in a height direction of the sodium-ion battery, and the insulating structure extends along a direction perpendicular to the height direction and extends to the surface of the negative electrode plate.

Therefore, the insulating structure of this application can further alleviate the risk of short circuit caused by sodium metal overflowing to the end portion of the negative electrode plate and coming into contact with the positive electrode plate, thereby further improving the safety performance of the sodium-ion battery.

In some embodiments, the insulating structure is disposed on two sides of the ion conductor in the height direction. The problem of metal overflowing can be alleviated on both sides of the ion conductor in the height direction, thereby further improving the safety performance of the sodium-ion battery.

In some embodiments, the insulating structure covers at least a portion of the positive electrode plate in the height direction. Therefore, the insulating structure can further isolate the positive electrode plate from the negative electrode plate, reducing the risk of contact between the positive electrode plate and the negative electrode plate, thereby further improving the safety performance of the sodium-ion battery.

In some embodiments, the positive electrode plate includes a positive electrode current collector and a positive electrode active substance layer disposed on at least one surface of the positive electrode current collector, the positive electrode active substance layer includes a positive electrode active substance, and the insulating structure covers the positive electrode active substance layer in the height direction.

In some embodiments, the insulating structure is configured to conduct the sodium ions between the positive electrode plate and the negative electrode plate, and the sodium ions conducted to the surface of the negative electrode plate are reduced to sodium metal. The insulating structure can further extend the migration paths of sodium ions, thereby further improving kinetic performance of the sodium-ion battery.

In some embodiments, the negative electrode plate includes a negative electrode current collector, and a surface of the negative electrode current collector is in contact with the ion conductor.

In some embodiments, the negative electrode plate includes a negative electrode current collector and a conductive layer disposed on at least one surface of the negative electrode current collector, a surface of the conductive layer is in contact with the ion conductor, and the conductive layer is configured to receive sodium ions such that the sodium ions are reduced to sodium metal. The conductive layer can enhance conductivity of the negative electrode plate, facilitating the deposition of sodium ions as sodium metal on the conductive layer.

According to a second aspect, this application provides a battery. The battery includes the sodium-ion battery according to any one of the embodiments of the first aspect of this application.

According to a third aspect, this application provides an electric apparatus. The electric apparatus includes the battery according to any one of the embodiments of the second aspect of this application.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic diagram of a sodium-ion battery according to an embodiment of this application.
FIG. 2 is a schematic exploded view of the sodium-ion battery according to the embodiment in FIG. 1.
FIG. 3 is a schematic diagram of an electrode assembly of a sodium-ion battery of this application.
FIG. 4 is another schematic diagram of an electrode assembly of a sodium-ion battery of this application.
FIG. 5 is a schematic diagram of a battery module according to an embodiment of this application.
FIG. 6 is a schematic diagram of a battery pack according to an embodiment of this application.
FIG. 7 is a schematic exploded view of the battery pack according to the embodiment in FIG. 6.
FIG. 8 is a schematic diagram of an electric apparatus using a sodium-ion battery of this application as a power source according to an embodiment.

The figures are not necessarily drawn to scale.

Reference signs:
1. battery pack; 2. upper box body; 3. lower box body; 4. battery module;
5. sodium-ion battery; 51. housing; 52. electrode assembly; 521. positive electrode plate; 5211. positive electrode active substance layer; 5212. positive electrode current collector; 522. negative electrode plate; 523. ion conductor; 524. insulating structure;
53. cover plate; and
6. electric apparatus.

### DESCRIPTION OF EMBODIMENTS

The following specifically discloses in detail embodiments of the lithium sodium-ion battery, battery, and electric apparatus of this application, with appropriate reference to the accompanying drawings. However, there may be cases in which unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise stated, all the embodiments and optional embodiments of this application can be combined with each other to form new technical solutions.

Unless otherwise stated, all the technical features and optional technical features of this application can be combined with each other to form new technical solutions.

Unless otherwise stated, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Alkali-ion batteries are widely used in the field of new energy due to advantages such as high energy density and high specific capacity. Alkali metal batteries typically include lithium-ion batteries and sodium-ion batteries. However, because lithium resources in the crust are limited and unevenly distributed, the development of lithium-ion batteries is constrained; whereas sodium resources are abundant and widely distributed, showing their resource advantages.

A sodium-ion battery includes an electrode assembly and an electrolyte. The electrode assembly includes a positive electrode plate, a negative electrode plate, and a separator. The separator is located between the positive electrode plate and the negative electrode plate to isolate the positive electrode plate from the negative electrode plate. Sodium ions migrate between the positive electrode plate and the negative electrode plate through the electrolyte to implement charging and discharging of the sodium-ion battery.

The positive electrode plate may include a positive electrode current collector and a positive electrode active substance layer, and the positive electrode active substance layer is generally applied on a surface of the positive electrode current collector; while the negative electrode plate may not include a negative electrode active substance during preparation, for example, the negative electrode plate includes a negative electrode current collector.

The inventors have found that during charging of the sodium-ion battery, sodium ions migrate from the positive electrode plate to the negative electrode plate, and can gain electrons and deposit as sodium metal on a surface of the negative electrode current collector of the negative electrode plate. As the charging time increases, the amount of the deposited sodium metal gradually increases, and overall thickness of the negative electrode plate increases, making the deposited sodium metal likely to be squeezed to an end portion of the negative electrode plate. Consequently, the sodium metal may bypass the separator and come into contact with the positive electrode plate to cause short circuit, posing safety risks of the sodium-ion battery.

In view of the foregoing problem proposed by the inventors, the inventors have improved the sodium-ion battery and proposed a sodium-ion battery. The sodium-ion battery includes an ion conductor disposed between the positive electrode plate and the negative electrode plate. The ion conductor has low fluidity, and can isolate the positive electrode plate from the negative electrode plate and conduct sodium ions. In addition, the ion conductor provides conduction paths for sodium ions, and sodium ions migrate to the surface of the negative electrode plate through the ion conductor and deposit as sodium metal, where the deposition range of the sodium metal corresponds to the distribution position of the ion conductor. Therefore, the solution of this application can reduce the deposition range of sodium metal, thereby reducing the risk of short circuit caused by contact between the negative electrode plate and the positive electrode plate.

The ion conductor has excellent elasticity, which allows it to deform correspondingly in regions with significant sodium metal deposition, reduces the risk of the sodium metal being squeezed out, and reduces the risk of short circuit caused by contact between the squeezed-out sodium metal and the positive electrode plate, thereby improving safety performance of the sodium-ion battery and effectively improving cycling performance of the sodium-ion battery. The solutions of this application are hereinafter described in detail.

### Sodium-ion battery

According to a first aspect, this application provides a sodium-ion battery.

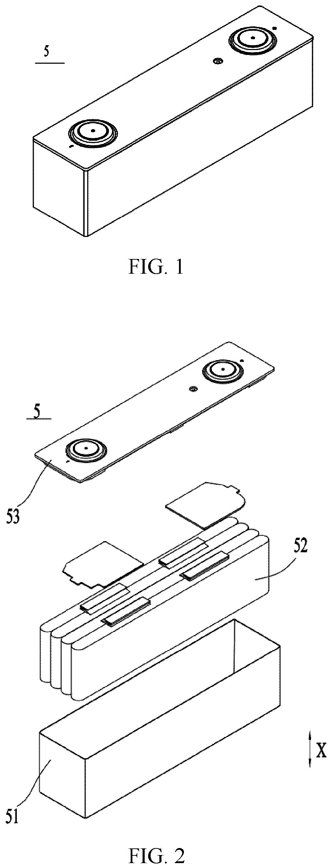

As shown in FIG. 1 to FIG. 3, the sodium-ion battery 5 may be a rechargeable battery or a storage battery.

The sodium-ion battery 5 includes a positive electrode plate 521, a negative electrode plate 522, and an ion conductor 523, where the ion conductor 523 is disposed between the positive electrode plate 521 and the negative electrode plate 522. The ion conductor 523 is at least in contact with a surface of the negative electrode plate 522, the ion conductor 523 is configured to conduct sodium ions between the positive electrode plate 521 and the negative electrode plate 522, and sodium ions conducted to the surface of the negative electrode plate 522 are reduced to sodium metal, where an elastic modulus of the ion conductor 523 is E in GPa, where 0.10 ≤ E ≤ 5.00.

The inventors have found through research that although the action mechanism is not very clear, this application can significantly improve safety performance and cycling performance of the sodium-ion battery 5. The inventors have speculated that the action mechanism of this application is as follows.

The ion conductor 523 is disposed between the positive electrode plate 521 and the negative electrode plate 522, and can isolate the positive electrode plate 521 from the negative electrode plate 522 to prevent short circuit between the positive electrode plate 521 and the negative electrode plate 522. In addition, the ion conductor 523 can also allow sodium ions to pass through, allowing sodium ions to migrate between the positive electrode plate 521 and the negative electrode plate 522 to implement charging and discharging of the sodium-ion battery 5.

The ion conductor 523 is in a solid and/or gel state. When sodium ions migrate through the ion conductor 523, the ion conductor 523 restricts migration paths of sodium ions. Sodium ions are conducted to the surface of the negative electrode plate 522 through the ion conductor 523 and gain electrons to become sodium metal. The precipitation region of the sodium metal on the surface of the negative electrode plate 522 corresponds to the distribution region of the ion conductor 523. The precipitated sodium metal is isolated from the positive electrode plate 521 by the ion conductor 523, meaning that the sodium metal is less likely to come into contact with the positive electrode plate 521, reducing the risk of safety issues caused by short-circuiting between the sodium metal and the positive electrode plate 521, thereby improving the safety performance of the sodium-ion battery 5.

The ion conductor 523 has certain elasticity. For example, the elastic modulus is 0.10 GPa to 5.00 GPa, where the elastic modulus mainly refers to the maximum stress required for the ion conductor 523 to undergo unit elastic deformation under an external force, which can reflect the ability of the ion conductor 523 to resist elastic deformation. During charging of the sodium-ion battery 5, as the amount of the sodium metal precipitated on the surface of the negative electrode plate 522 increases, overall thickness of the negative electrode plate 522 increases accordingly, and the negative electrode plate 522 exerts a squeezing force on the ion conductor 523, which causes the ion conductor 523 to deform to some extent under the action of the squeezing force, reducing the risk of the sodium metal being squeezed out of a region of the negative electrode plate 522 extending beyond the ion conductor 523, and reducing the risk of short circuit caused by contact between the squeezed-out sodium metal and the positive electrode plate 521, thereby further improving the safety performance of the sodium-ion battery 5 and effectively improving the cycling performance of the sodium-ion battery 5. Optionally, 0.10 ≤ E ≤ 3.00. For example, the elastic modulus of the ion conductor 523 is 0.10 GPa, 0.20 GPa, 0.50 GPa, 0.80 GPa, 1.00 GPa, 1.50 GPa, 2.00 GPa, 2.50 GPa, 3.00 GPa, 3.50 GPa, 4.00 GPa, 5.00 GPa, or within a range defined by any two of these values.

In some embodiments, the ion conductor 523 is also in contact with a surface of the positive electrode plate 521, which helps sodium ions to be intercalated into or deintercalated from a positive electrode active substance layer 5211 of the positive electrode plate 521.

Certainly, the ion conductor 523 may alternatively have a gap with the surface of the positive electrode plate 521. In this case, the ion conductor 523 can be used in conjunction with a liquid electrolyte, allowing sodium metal to be intercalated into or deintercalated from the positive electrode active substance layer 5211 through the liquid electrolyte. In addition, because the ion conductor 523 is in contact with the surface of the negative electrode plate 522, when sodium ions migrate to the surface of the negative electrode plate 522, the migration paths thereof are always limited to the distribution region of the ion conductor 523, such that sodium ions are reduced to sodium metal on the surface of the negative electrode plate 522 corresponding to the ion conductor 523, resulting in a small probability of direct contact between the sodium metal and the positive electrode plate 521, thereby improving the safety performance of the sodium-ion battery 5.

The ion conductor 523 in this application has various types, such as solid electrolyte, gel electrolyte, and a composite structure of a supporting layer and a conducting layer. The types of the ion conductor 523 are hereinafter described in detail.

In some embodiments, the ion conductor 523 includes a solid electrolyte. In this case, the elastic modulus of the ion conductor 523 is relatively high, for example, 1.00 ≤ E ≤ 5.00. Optionally, 1.00 ≤ E ≤ 3.00. For example, the elastic modulus of the ion conductor 523 is 1.00 GPa, 1.50 GPa, 2.00 GPa, 2.50 GPa, 3.00 GPa, 3.50 GPa, 4.00 GPa, 5.00 GPa, or within a range defined by any two of these values.

In some embodiments, the solid electrolyte includes a solid polymer electrolyte and/or a solid inorganic-polymer composite electrolyte.

The solid electrolyte includes a continuously disposed matrix, and material of the matrix may include a polymer matrix or an inorganic matrix-polymer matrix composite matrix. The solid polymer electrolyte may further include an electrolytic salt, and the electrolytic salt is dispersed in the polymer matrix, where sodium ions may be cations of the electrolytic salt, the polymer matrix is a continuous phase, and the electrolytic salt is located in the polymer matrix. Certainly, the solid polymer electrolyte may alternatively not include the electrolytic salt. The polymer matrix typically includes crystalline regions and amorphous regions, where functional groups in the polymer matrix dissolve sodium ions through coordination, the dissolved sodium ions mainly exist in the amorphous regions, and the sodium ions mainly migrate through segmental motion in the amorphous regions.

In some embodiments, the polymer matrix includes one or more of polyether compound, polyacrylonitrile, polyacrylate compound, and fluoropolymer.

For example, the polyether compound includes one or more of polyethylene oxide and polypropylene oxide.

For example, the polyacrylate compound includes one or more of polymethacrylate, polyethyl acrylate, and polyhydroxymethacrylate.

For example, the fluoropolymer includes polyvinylidene fluoride and the like.

In some embodiments, the electrolytic salt may include but is not limited to at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalato)borate (NaBOB), sodium difluorophosphate (NaPO₂F₂), sodium difluorobis(oxalato)phosphate (NaDFOP), and sodium tetrafluoro(oxalato)phosphate (NaTFOP).

In some embodiments, the inorganic matrix includes oxide glass, sulfide glass, and the like. The inorganic matrix contains many defects such as voids and interstitial ions, where the voids are atomic vacancies where atoms should fill, and the interstitial ions are ions present in the gaps of an ideal crystal lattice. Under the action of an electric field, a large number of disordered ions move from one position to another, thereby imparting conductivity to the inorganic matrix.

For example, the oxide glass includes silicon oxide matrix, boron oxide matrix, phosphorus oxide matrix, and the like.

For example, the sulfide glass includes lithium sulfide-silicon sulfide Li₂S-SiS₂ matrix, lithium sulfide-phosphorus sulfide Li₂S-P₂S₅ matrix, and the like.

In some embodiments, the ion conductor 523 includes a gel electrolyte. In this case, the elastic modulus of the ion conductor 523 is relatively low, for example, 0.10 ≤ E ≤ 2.00. For example, the elastic modulus of the ion conductor 523 is 0.10 GPa, 0.20 GPa, 0.50 GPa, 0.80 GPa, 1.00 GPa, 1.50 GPa, 2.00 GPa, or within a range defined by any two of these values.

The gel electrolyte includes a continuously disposed matrix, such as a polymer matrix, a plasticizer, and an electrolytic salt, where sodium ions are cations of the electrolytic salt. The polymer matrix presents a cross-linked spatial network structure, with its structural pores filled with the plasticizer. Both the polymer matrix and the plasticizer are continuous phases, and the electrolytic salt is dissolved in the polymer matrix and the plasticizer. The gel polymer contains multiple phases, such as crystalline phase, amorphous phase, and liquid phase, where the crystalline portion of the polymer constitutes the crystalline phase, the amorphous portion of the polymer swollen by the plasticizer constitutes the amorphous phase, and the plasticizer and lithium salt located in the pore structure of the polymer constitute the liquid phase.

In some embodiments, the polymer matrix includes one or more of polyether compound, polyacrylonitrile, polyacrylate compound, and fluoropolymer.

For example, the polyether compound includes one or more of polyethylene oxide and polypropylene oxide.

For example, the polyacrylate compound includes one or more of polymethacrylate, polyethyl acrylate, and polyhydroxymethacrylate.

For example, the fluoropolymer includes one or more of polyvinylidene fluoride and vinylidene fluoride-hexafluoropropylene copolymer.

In some embodiments, the electrolytic salt may include but is not limited to at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalato)borate (NaBOB), sodium difluorophosphate (NaPO₂F₂), sodium difluorobis(oxalato)phosphate (NaDFOP), and sodium tetrafluoro(oxalato)phosphate (NaTFOP).

In some embodiments, the plasticizer includes one or more of dimethylformamide (DMF), diethyl carbonate (DEC), γ-butyrolactone (BL), ethylene carbonate (EC), propylene carbonate (PC), and polyethylene glycol (PEG400).

In some embodiments, the ion conductor 523 is a layered structure. Specifically, the ion conductor 523 includes a supporting layer and a conducting layer, the conducting layer is located on a surface of the supporting layer, and the conducting layer is disposed on the surface of the negative electrode plate 522; where an elastic modulus of the conducting layer is E₁ in GPa, and an elastic modulus of the supporting layer is E₂ in GPa; where E₁/E₂ < 1.

The supporting layer has good mechanical performance, providing good support, and plays the role of insulation to isolate the positive electrode plate 521 from the negative electrode plate 522 and alleviate swelling. The conducting layer can conduct sodium ions, acting similarly to an electrolyte.

In some embodiments, 0.10 ≤ E₁ ≤ 2.00. The conducting layer may include a gel electrolyte, and the specific material of the gel electrolyte, such as a polymer matrix, is as described above and is not described herein again. For example, the elastic modulus of the conducting layer is 0.10 GPa, 0.20 GPa, 0.50 GPa, 0.80 GPa, 1.00 GPa, 1.50 GPa, 2.00 GPa, or within a range defined by any two of these values.

In some embodiments, 0.50 ≤ E₂ ≤ 6.00. Optionally, 0.50 ≤ E₂ ≤ 3.00. Material of the supporting layer is not particularly limited in this application, and may be any well-known material with good chemical stability and mechanical stability. For example, the supporting layer may include at least one of porous polyolefin-based resin film (for example, at least one of polyethylene, polypropylene, and polyvinylidene fluoride), porous glass fiber, and porous non-woven fabric. The supporting layer may be a single-layer film or a multi-layer composite film. When the supporting layer is a multi-layer composite film, all layers may be made of the same or different materials. For example, the elastic modulus of the supporting layer is 0.50 GPa, 1.00 GPa, 1.50 GPa, 2.00 GPa, 2.50 GPa, 3.00 GPa, 3.50 GPa, 4.00 GPa, 5.00 GPa, 6.00 GPa, or within a range defined by any two of these values.

In some embodiments, the elastic modulus of the ion conductor 523 including the supporting layer and the conducting layer satisfies 0.10 ≤ E ≤ 3.00. For example, the elastic modulus of the ion conductor 523 is 0.10 GPa, 0.20 GPa, 0.50 GPa, 0.80 GPa, 1.00 GPa, 1.50 GPa, 2.00 GPa, 2.50 GPa, 3.00 GPa, or within a range defined by any two of these values.

In this application, the elastic modulus of the material has a meaning well known in the art and can be measured by using an instrument and a method well known in the art. For example, the elastic modulus of the material is measured in accordance with GB/T 14694-1993 Plastics. Determination of compressive elastic modulus.

The inventors have found through further research that when the size of the ion conductor 523 further satisfies at least one of the following conditions, the safety performance of the sodium-ion battery 5 can be further improved.

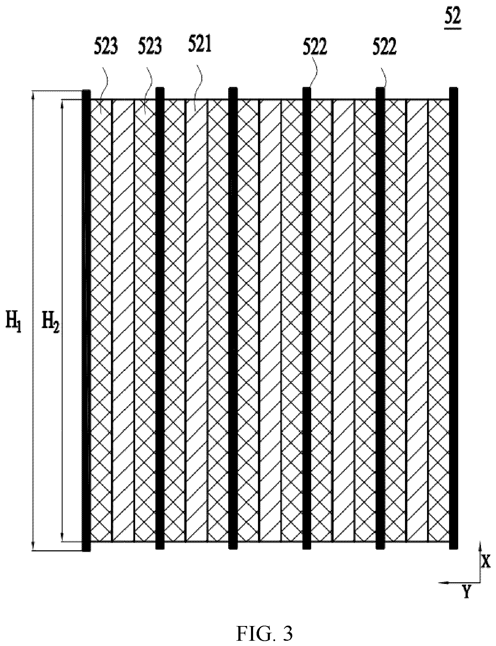

As shown in FIG. 3, in some embodiments, size of the negative electrode plate 522 in a height direction X of the sodium-ion battery 5 is H₁ in µm; and size of the ion conductor 523 in the height direction X of the sodium-ion battery 5 is H₂ in µm, where 0 < H₂/H₁ < 1. When the size of the ion conductor 523 in the height direction X satisfies the foregoing relation, it can extend migration paths of sodium ions while improving the safety performance of the sodium-ion battery 5, thereby improving kinetic performance of the sodium-ion battery 5. In FIG. 3, the direction X represents the height direction; H₁ represents the size of the negative electrode plate 522 in the height direction X, which can be understood as height of the negative electrode plate 522; and H₂ represents the size of the ion conductor 523 in the height direction X, which can be understood as height of the ion conductor 523.

The ion conductor 523 restricts the migration paths of sodium ions, meaning that sodium ions are limited to migrating within the ion conductor 523. When the size of the ion conductor 523 in the height direction X of the sodium-ion battery 5 (the height of the ion conductor 523) is smaller than the size of the negative electrode plate 522 in the height direction X (the height of the negative electrode plate 522), that is, 0 < H₂/H₁ < 1, sodium ions are conducted to the surface of the negative electrode plate 522 through the ion conductor 523 and gain electrons to become metal, and the precipitation region of the metal on the surface of the negative electrode plate 522 corresponds to the ion conductor 523, so the precipitated metal is less likely to come into contact with the positive electrode plate 521, reducing the risk of safety issues caused by short-circuiting between the metal and the positive electrode plate 521, thereby improving the safety performance of the sodium-ion battery 5.

In some embodiments, in the height direction X, the negative electrode plate 522 extends beyond two opposite sides of the ion conductor 523 in the height direction X. In other words, in the height direction X, both sides of the negative electrode plate 522 extend beyond the ion conductor 523. In such an arrangement manner, both sides of the negative electrode plate 522 in the height direction X have a certain region reserved, which can further reduce the problem of short-circuiting between the negative electrode plate 522 and the positive electrode plate 521 caused by sodium metal being precipitated to an end portion of the negative electrode plate 522, thereby improving the safety performance of the sodium-ion battery 5.

H₂/H₁ = 1 indicates that the height of the negative electrode plate 522 is equal to the height of the ion conductor 523, meaning that the ion conductor 523 can completely cover the negative electrode plate 522. In this case, the ion conductor 523 can also isolate the negative electrode plate 522 from the positive electrode plate 521, improving the safety performance of the sodium-ion battery 5.

H₂/H₁ > 1 indicates that the height of the ion conductor 523 is greater than the height of the ion conductor 523, meaning that the ion conductor 523 extends beyond the negative electrode plate 522. In this case, the ion conductor 523 can also isolate the negative electrode plate 522 from the positive electrode plate 521, improving the safety performance of the sodium-ion battery 5. However, considering other performance of the sodium-ion battery 5, such as energy density, H₂/H₁ ≤ 1 is typically set in this application.

In this application, the height of the negative electrode plate 522 and/or the height of the ion conductor 523 has a meaning well known in the art and can be measured by using a device and a method well known in the art. For example, the height of the negative electrode plate 522 and/or the height of the ion conductor 523 can be measured by using a laser width gauge.

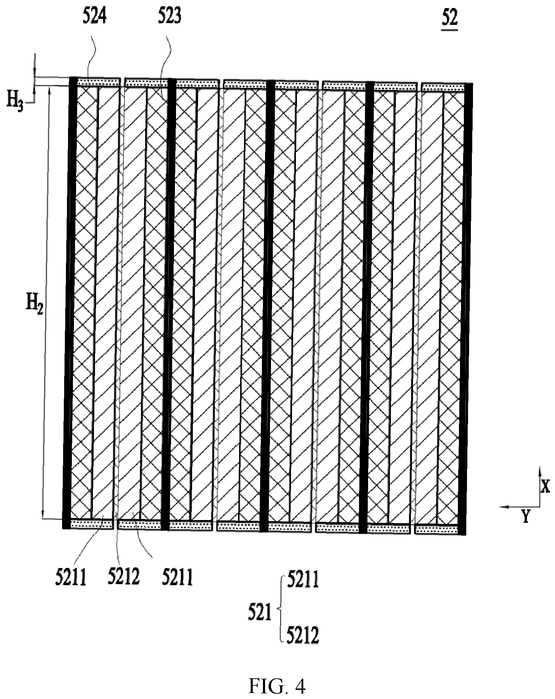

As shown in FIG. 4, the inventors have found through further research that to further improve the safety performance of the sodium-ion battery 5, in some embodiments, the sodium-ion battery 5 may include an insulating structure 524, the insulating structure 524 is disposed on at least one side of the ion conductor 523 in a height direction X of the sodium-ion battery 5, and the insulating structure 524 extends along a direction perpendicular to the height direction X and extends to the surface of the negative electrode plate 522. In FIG. 4, the direction Y represents the direction perpendicular to the height direction X, that is, the direction Y is perpendicular to the direction X.

The ion conductor 523 is located between the positive electrode plate 521 and the negative electrode plate 522, and can isolate the positive electrode plate 521 from the negative electrode plate 522; and the ion conductor 523 can conduct sodium ions, and migration paths of sodium ions can be restricted by the ion conductor 523. In this way, sodium ions gain electrons and are precipitated as sodium metal on the surface of the negative electrode plate 522 corresponding to the ion conductor 523, reducing the risk of short circuit caused by contact between the sodium metal and the positive electrode plate 521, thereby improving the safety performance of the sodium-ion battery 5.

The insulating structure 524 is located on at least one side of the ion conductor 523 in the height direction X, meaning that the insulating structure 524 may be located on one side of the ion conductor 523 in the height direction X, or the insulating structure 524 may be located on two sides of the ion conductor 523 in the height direction X. The insulating structure 524 can further alleviate the risk of short circuit caused by sodium metal overflowing to the end portion of the negative electrode plate 522 and coming into contact with the positive electrode plate 521, thereby further improving the safety performance of the sodium-ion battery 5. When the insulating structure 524 is located on two sides of the ion conductor 523 in the height direction X, the problem of metal overflowing can be alleviated on both sides of the ion conductor 523 in the height direction X, thereby further improving the safety performance of the sodium-ion battery 5.

Furthermore, the insulating structure 524 also extends to a side of the positive electrode plate 521 in the height direction X, meaning that the insulating structure 524 covers at least a portion of the positive electrode plate 521 in the height direction X. In this way, the positive electrode plate 521 can be further isolated from the negative electrode plate 522, reducing the risk of contact between the positive electrode plate 521 and the negative electrode plate 522, thereby further improving the safety performance of the sodium-ion battery 5. For example, the positive electrode plate 521 includes a positive electrode current collector 5212 and a positive electrode active substance layer 5211 disposed on at least one surface of the positive electrode current collector 5212, and the insulating structure 524 covers the positive electrode active substance layer 5211 in the height direction X.

In some embodiments, the insulating structure 524 is configured to conduct sodium ions between the positive electrode plate 521 and the negative electrode plate 522, and sodium ions conducted to the surface of the negative electrode plate 522 are reduced to sodium metal. The insulating structure 524 plays the role of isolation and can conduct sodium ions. For example, material of the insulating structure 524 may be the same as or similar to the material of the ion conductor 523, such as including a solid electrolyte, a gel electrolyte, or a composite separator structure. In this case, the insulating structure 524 can also further extend the migration paths of sodium ions, thereby further improving the kinetic performance of the sodium-ion battery 5.

In some other embodiments, the insulating structure 524 can play the role of isolation only. For example, material of an end component may include at least one of porous polyolefin-based resin film (for example, at least one of polyethylene, polypropylene, and polyvinylidene fluoride), porous glass fiber, and porous non-woven fabric.

In some embodiments, size of the ion conductor 523 in the height direction X is H₂ in µm; and size of the insulating structure 524 in the height direction X is H₃ in µm; where the sodium-ion battery 5 satisfies 0.01 ≤ H₃/H₂ ≤ 0.20. In FIG. 4, H₂ represents the size of the ion conductor 523 in the height direction X, namely, height of the ion conductor 523, and H₃ represents the size of the insulating structure 524 in the height direction X.

When the sodium-ion battery 5 satisfies the foregoing range, the space occupied by the insulating structure 524 can be reduced while the insulating structure 524 and the ion conductor 523 can improve the safety performance of the sodium-ion battery 5, increasing the space occupied by the positive electrode plate 521 and the negative electrode plate 522, thereby increasing the energy density of the sodium-ion battery 5.

### [Positive electrode plate]

In some embodiments, the positive electrode plate 521 includes a positive electrode current collector 5212 and a positive electrode active substance layer 5211 that is disposed on at least one surface of the positive electrode current collector 5212 and that includes a positive electrode active substance. For example, the positive electrode current collector 5212 has two opposite surfaces in its thickness direction, and the positive electrode active substance layer 5211 is disposed on either or both of the two opposite surfaces of the positive electrode current collector 5212.

The positive electrode active substance may include but is not limited to at least one of sodium-containing transition metal oxide, a polyanionic material (for example, phosphate, fluorophosphate, pyrophosphate, and sulfate), and a Prussian blue material.

For example, the positive electrode active substance for the sodium-ion battery 5 may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material with a general formula XₚM'_{q}(PO₄)ᵣOₓY₃₋ₓ. In the general formula XₚM'_{q}(PO₄)ᵣOₓY₃₋ₓ, 0 < p ≤ 4, 0 < q ≤ 2, 1 ≤ r ≤ 3, 0 ≤ x ≤ 2, X is at least one selected from H⁺, Li⁺, Na⁺, K⁺, and NH₄⁺, M' is a transition metal cation, and optionally at least one of V, Ti, Mn, Fe, Co, Ni, Cu, and Zn, and Y is a halogen anion, and optionally at least one of F, Cl, and Br.

In this application, the modified compounds of the foregoing positive electrode active substances may be obtained through doping modification and/or surface coating modification to the positive electrode active substances.

In some embodiments, the positive electrode active substance layer 5211 further optionally includes a positive electrode conductive agent. The positive electrode conductive agent is not limited to a particular type in this application. For example, the positive electrode conductive agent includes at least one of superconducting carbon, conductive graphite, acetylene black, carbon black, Ketjen black, carbon dots, carbon nanotubes, graphene, and carbon nanofiber. In some embodiments, based on a total weight of the positive electrode active substance layer 5211, a mass percentage of the positive electrode conductive agent is ≤ 5wt%.

In some embodiments, the positive electrode active substance layer 5211 further optionally includes a positive electrode binder. The positive electrode binder is not limited to a particular type in this application. For example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. In some embodiments, based on the total weight of the positive electrode active substance layer 5211, a mass percentage of the positive electrode binder is ≤ 5wt%.

In some embodiments, the positive electrode current collector 5212 may be a metal foil current collector or a composite current collector. For example, an aluminum foil may be used as the metal foil. The composite current collector may include a polymer material matrix and a metal material layer formed on at least one surface of the polymer material matrix. For example, the metal material may include at least one of aluminum, aluminum alloy, nickel, nickel alloy, titanium, titanium alloy, silver, and silver alloy. For example, the polymer material matrix may include at least one of polypropylene (PP), polyethylene terephthalate (PET), polybutylene terephthalate (PBT), polystyrene (PS), and polyethylene (PE).

The positive electrode active substance layer 5211 is typically formed by applying a positive electrode slurry onto the positive electrode current collector 5212, followed by drying and cold pressing. The positive electrode slurry is typically formed by dispersing the positive electrode active substance, the optional conductive agent, the optional binder, and any other components in a solvent and stirring them to uniformity. The solvent may be N-methylpyrrolidone (NMP), but is not limited thereto.

### [Negative electrode plate]

In some embodiments, the negative electrode plate 522 includes a negative electrode current collector, and a surface of the negative electrode current collector is in contact with the ion conductor 523.

In some other embodiments, the negative electrode plate 522 includes a negative electrode current collector and a conductive layer disposed on at least one surface of the negative electrode current collector, a surface of the conductive layer is in contact with the ion conductor 523, and the conductive layer is configured to receive sodium ions such that the sodium ions are reduced to sodium metal. For example, the main material of the conductive layer may include at least one of superconducting carbon, conductive graphite, acetylene black, carbon black, Ketjen black, carbon dots, carbon nanotubes, graphene, and carbon nanofiber.

Further, the conductive layer may further include a binder, and the binder may be but is not limited to one or more of styrene-butadiene rubber (SBR), polyvinylidene fluoride (PVDF), polytetrafluoroethylene (PTFE), polyvinyl butyral (PVB), water-borne acrylic resin, and carboxymethyl cellulose (CMC).

For example, the negative electrode current collector may be a metal foil current collector or a composite current collector. For example, a copper foil and/or an aluminum foil may be used as the metal foil. The composite current collector may include a polymer material matrix and a metal material layer formed on at least one surface of the polymer material matrix. For example, the metal material may include at least one of copper, copper alloy, nickel, nickel alloy, titanium, titanium alloy, silver, and silver alloy. For example, the polymer material matrix may include at least one of polypropylene (PP), polyethylene terephthalate (PET), polybutylene terephthalate (PBT), polystyrene (PS), and polyethylene (PE).

### [Electrolyte]

In some embodiments, the sodium-ion battery 5 may not include an electrolyte, and the ion conductor 523 can conduct sodium ions.

In some other embodiments, the sodium-ion battery 5 may include an electrolyte, and the electrolyte can work in conjunction with the ion conductor 523.

The electrolyte is not limited to a particular type in this application, and can be selected based on actual needs.

The electrolyte includes an electrolytic salt and a solvent. The electrolytic salt and the solvent are not limited to specific types, and can be selected based on actual needs.

For example, the electrolytic salt may include but is not limited to at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalato)borate (NaBOB), sodium difluorophosphate (NaPO₂F₂), sodium difluorobis(oxalato)phosphate (NaDFOP), and sodium tetrafluoro(oxalato)phosphate (NaTFOP).

For example, the solvent may include but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), ethyl methanesulfonate (EMS), or diethyl sulfone (ESE).

In some embodiments, the electrolyte further optionally includes an additive. For example, the additive may include a negative electrode film-forming additive, or may include a positive electrode film-forming additive, or may include an additive capable of improving some performance of the battery, for example, an additive for improving overcharge resistance of the battery, an additive for improving high-temperature performance of the battery, or an additive for improving low-temperature power performance of the battery.

In some embodiments, the positive electrode plate 521, the ion conductor 523, and the negative electrode plate 522 may be made into an electrode assembly through winding and/or lamination.

In some embodiments, the sodium-ion battery 5 may include an outer package. The outer package may be used for packaging the foregoing electrode assembly.

In some embodiments, the outer package of the sodium-ion battery 5 may be a hard shell, for example, a hard plastic shell, an aluminum shell, or a steel shell. The outer package of the sodium-ion battery 5 may alternatively be a soft pack, for example, a soft pouch. A material of the soft pack may be plastic, for example, at least one of polypropylene (PP), polybutylene terephthalate (PBT), and polybutylene succinate (PBS).

The sodium-ion battery 5 is not limited to a particular shape in this application, and may be cylindrical, rectangular, or of any other shapes. For example, FIG. 1 shows a rectangular sodium-ion battery 5 as an example.

In some embodiments, as shown in FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 is configured to cover the opening to close the accommodating cavity. The positive electrode plate 521, the negative electrode plate 522, the ion conductor 523, and the like may be made into an electrode assembly 52 through winding and/or lamination. The electrode assembly 52 is packaged in the accommodating cavity. The sodium-ion battery 5 may include one or more electrode assemblies 52, and the quantity may be adjusted as required.

The preparation method of the sodium-ion battery 5 of this application is well known. In some embodiments, the positive electrode plate 521, the ion conductor 523, and the negative electrode plate 522 may be assembled to form the sodium-ion battery 5.

In some embodiments of this application, such sodium-ion batteries 5 of this application may be assembled into a battery module, and the battery module may include a plurality of sodium-ion batteries. A specific quantity may be adjusted based on application and capacity of the battery module.

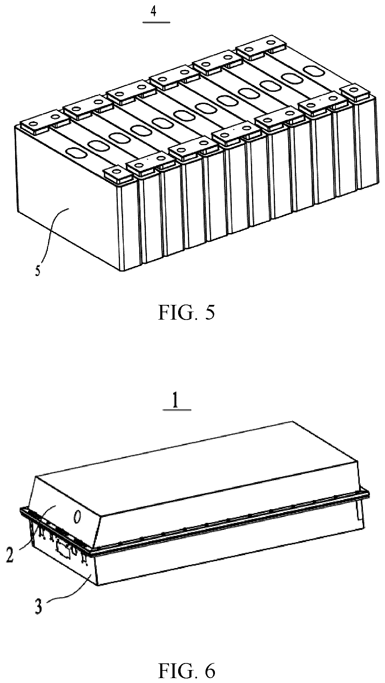

FIG. 5 is a schematic diagram of a battery module 4 as an example. As shown in FIG. 5, in the battery module 4, a plurality of sodium-ion batteries 5 may be sequentially arranged in a length direction of the battery module 4. Certainly, the sodium-ion batteries 5 may alternatively be arranged in any other manner. Further, the plurality of sodium-ion batteries 5 may be fixed by fasteners.

Optionally, the battery module 4 may further include a shell with an accommodating space, and the plurality of sodium-ion batteries 5 are accommodated in the accommodating space.

In some embodiments, the battery modules may be further assembled into a battery pack, and a quantity of battery modules included in the battery pack may be adjusted based on application and capacity of the battery pack.

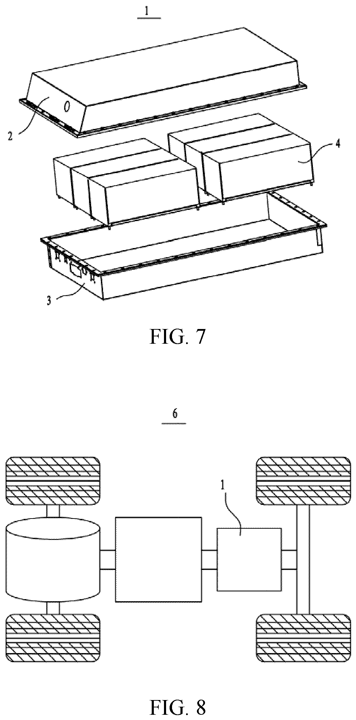

FIG. 6 and FIG. 7 are schematic diagrams of a battery pack 1 as an example. As shown in FIG. 6 and FIG. 7, the battery pack 1 may include a battery box and a plurality of battery modules 4 arranged in the battery box. The battery box includes an upper box body 2 and a lower box body 3. The upper box body 2 is configured to cover the lower box body 3 to form an enclosed space for accommodating the battery modules 4. The plurality of battery modules 4 may be arranged in the battery box in any manner.

The battery may include the battery module or the battery pack.

### ELECTRIC APPARATUS

An embodiment of this application further provides an electric apparatus. The electric apparatus includes at least one of the sodium-ion battery, the battery module, or the battery pack of this application. The sodium-ion battery, the battery module, or the battery pack may be used as a power source of the electric apparatus or an energy storage unit of the electric apparatus. The electric apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The sodium-ion battery, the battery module, or the battery pack may be selected for the electric apparatus based on requirements for using the electric apparatus.

FIG. 8 is a schematic diagram of an electric apparatus as an example. The electric apparatus is a battery electric vehicle, a hybrid electric vehicle, a plug-in hybrid electric vehicle, or the like. To satisfy requirements of the electric apparatus for high power and high energy density, a battery pack or a battery module may be used.

In another example, the electric apparatus may be a mobile phone, a tablet computer, a notebook computer, or the like. Such electric apparatus is generally required to be light and thin and may use a sodium-ion battery as its power source.

### Example

Content disclosed in this application is described in more detail in the following examples. These examples are only for illustrative purposes because various modifications and changes made without departing from the scope of the content disclosed in this application are apparent to persons skilled in the art. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

### Comparative Example 1

### 1. Preparation of positive electrode plate

A 12 µm thick aluminum foil was used as a positive electrode current collector.

A positive electrode active substance NaNi_{1/3}Co_{1/3}Mn_{1/3}O₂, a conductive agent Super P, and a binder polyvinylidene fluoride at a mass ratio of 96.2:2.7: 1.1 were added to N-methylpyrrolidone (NMP) to produce a positive electrode slurry. The positive electrode slurry was applied onto the current collector aluminum foil, and the resulting current collector was dried at 85°C, followed by cold pressing, trimming, cutting, slitting, and drying in vacuum at 85°C for 4 h, to obtain a positive electrode plate.

### 2. Preparation of negative electrode plate

An 8 µm thick copper foil was used as a negative electrode current collector.

Conductive carbon and a binder styrene-butadiene rubber (SBR) were evenly mixed at a mass ratio of 90:10 in deionized water to produce a conductive slurry, where a solid content of the conductive slurry was 30wt%. The conductive slurry was applied onto the negative electrode current collector copper foil, and the resulting current collector was dried at 85°C, followed by cold pressing, trimming, cutting, slitting, and drying in vacuum at 120°C for 12 h, to obtain a negative electrode plate.

### 3. Preparation of electrolyte

In an environment with a water content less than 10 ppm, non-aqueous organic solvents diethylene glycol dimethyl ether and triethylene glycol dimethyl ether were mixed at a volume ratio of 1:1 to obtain an electrolyte solvent, and then an electrolytic sodium salt sodium hexafluorophosphate and the mixed solvent were mixed to prepare an electrolyte with a sodium salt concentration of 1 mol/L.

### 4. Preparation of sodium-ion battery

A 16 µm thick polyethylene film (PE) was used as a separator. The positive electrode plate, the separator, and the negative electrode plate were sequentially stacked so that the separator was located between the positive electrode plate and the negative electrode plate for separation. Then, the resulting stack was wound to obtain an electrode assembly. The electrode assembly was placed into an outer package shell and dried, and the electrolyte was then injected, followed by processes such as vacuum sealing, standing, formation, and shaping, to obtain a sodium-ion battery.

### Comparative Example 2

### 1. Preparation of positive electrode plate

A 12 µm thick aluminum foil was used as a positive electrode current collector.

A positive electrode active substance NaNi_{1/3}Co_{1/3}Mn_{1/3}O₂, a conductive agent Super P, and a binder polyvinylidene fluoride at a mass ratio of 96.2:2.7: 1.1 were added to N-methylpyrrolidone (NMP) to produce a positive electrode slurry. The positive electrode slurry was applied onto the current collector aluminum foil, and the resulting current collector was dried at 85°C, followed by cold pressing, trimming, cutting, slitting, and drying in vacuum at 85°C for 4 h, to obtain a positive electrode plate.

### 2. Preparation of negative electrode plate

An 8 µm thick copper foil was used as a negative electrode current collector.

### 3. Preparation of polyvinylidene fluoride-hexafluoropropylene copolymer PVDF-HFP solid electrolyte

Polyvinylidene fluoride-hexafluoropropylene copolymer PVDF-HFP was dissolved in N-methylpyrrolidone NMP at a material-to-liquid ratio of 1:100 g/ml, and then mixed with a sodium salt (sodium hexafluorophosphate) at a molar ratio of a total molar amount of VDF and HFP to Na⁺ being 10:1. The mixture was subjected to high-temperature drying at > 80°C for 12 h to obtain a PVDF-HFP solid electrolyte.

### 4. Preparation of sodium-ion battery

The positive electrode plate, the solid electrolyte, and the negative electrode plate were sequentially stacked so that the solid electrolyte was located between the positive electrode plate and the negative electrode plate. Then, the resulting stack was wound and placed into an outer package shell, followed by processes such as vacuum sealing, standing, formation, and shaping, to obtain a sodium-ion battery.

### Example 1-1

### 1. Preparation of positive electrode plate

A 12 µm thick aluminum foil was used as a positive electrode current collector. A positive electrode active substance NaNi_{1/3}Co_{1/3}Mn_{1/3}O₂, a conductive agent Super P, and a binder polyvinylidene fluoride at a mass ratio of 96.2:2.7:1.1 were added to N-methylpyrrolidone (NMP) to produce a positive electrode slurry. The positive electrode slurry was applied onto the current collector aluminum foil, and the resulting current collector was dried at 85°C, followed by cold pressing, trimming, cutting, slitting, and drying in vacuum at 85°C for 4 h, to obtain a positive electrode plate.

### 2. Preparation of negative electrode plate

An 8 µm thick copper foil was used as a negative electrode current collector.

### 3. Preparation of ion conductor (polyethylene oxide PEO-based solid electrolyte)

Polyethylene oxide PEO was dissolved in DMF at a material-to-liquid ratio of 1:100 g/ml, and then mixed with a sodium salt at a molar ratio of EO to Na⁺ being 10:1. The mixture was subjected to high-temperature drying at > 80°C for 12 h to obtain a PEO-based solid electrolyte.

### 4. Preparation of sodium-ion battery

The positive electrode plate, the ion conductor, and the negative electrode plate were sequentially stacked so that the ion conductor was located between the positive electrode plate and the negative electrode plate for separation. Then, the resulting stack was wound to obtain an electrode assembly. The electrode assembly was placed into an outer package shell, followed by processes such as vacuum sealing, standing, formation, and shaping, to obtain a sodium-ion battery.

### Example 1-2

Different from Example 1-1, the ion conductor used different materials, and the specific preparation steps were as follows.

Polyethylene oxide PEO-polyvinylidene fluoride PVDF was dissolved in N,N-dimethylformamide DMF at a material-to-liquid ratio of 1:100 g/ml, and then mixed with a sodium salt (sodium hexafluorophosphate) at a molar ratio of a total molar amount of ethylene oxide EO and vinylidene fluoride VDF to Na⁺ being 10:1. The mixture was subjected to high-temperature drying at > 80°C for 12 h to obtain a polyethylene oxide PEO-polyvinylidene fluoride PVDF-based solid electrolyte.

### Example 1-3

Different from Example 1-1, the ion conductor used different materials, and the specific preparation steps were as follows.

Polyvinylidene fluoride PVDF was dissolved in DMF at a material-to-liquid ratio of 1:100 g/ml, and then mixed with a sodium salt at a molar ratio of VDF to Na⁺ being 10:1. The mixture was subjected to high-temperature drying at > 80°C for 12 h to obtain a PVDF-based solid electrolyte.

### Example 2-1

### 1. Preparation of positive electrode plate

A 12 µm thick aluminum foil was used as a positive electrode current collector.

A positive electrode active substance NaNi_{1/3}Co_{1/3}Mn_{1/3}O₂, a conductive agent Super P, and a binder polyvinylidene fluoride at a mass ratio of 96.2:2.7: 1.1 were added to N-methylpyrrolidone (NMP) to produce a positive electrode slurry. The positive electrode slurry was applied onto the current collector aluminum foil, and the resulting current collector was dried at 85°C, followed by cold pressing, trimming, cutting, slitting, and drying in vacuum at 85°C for 4 h, to obtain a positive electrode plate.

### 2. Preparation of negative electrode plate

An 8 µm thick copper foil was used as a negative electrode current collector.

### 3. Preparation of sodium-ion battery

Polymethyl methacrylate PMMA was used as a gel base solution, PMMA particles were dissolved in a DMF solvent at a material-to-liquid ratio of 1:5, and the mixture was placed into a mold and dried for 12 h to obtain a gel system.

The positive electrode plate and the negative electrode plate were sequentially stacked, and then wound to obtain an electrode assembly. The electrode assembly was placed into an outer package shell, the gel system was added to the outer package, and an electrolyte was injected for infiltration for 4 h, to obtain a sodium-ion battery.

Preparation of the electrolyte was as follows: In an environment with a water content less than 10 ppm, non-aqueous organic solvents diethylene glycol dimethyl ether and triethylene glycol dimethyl ether were mixed at a volume ratio of 1:1 to obtain an electrolyte solvent, and then an electrolytic sodium salt sodium hexafluorophosphate and the mixed solvent were mixed to prepare an electrolyte with a sodium salt concentration of 1 mol/L.

### Example 2-2

Different from Example 2-1, the ion conductor used different materials, and the specific preparation steps of the sodium-ion battery were as follows: Polyacrylonitrile PAN was used as a gel base solution, PAN particles were dissolved in a DMF solvent at a material-to-liquid ratio of 1:5, and the mixture was placed into a mold and dried for 12 h to obtain a gel system.

The positive electrode plate and the negative electrode plate were sequentially stacked, and then wound to obtain an electrode assembly. The electrode assembly was placed into an outer package shell, the gel system was added to the outer package, and the electrolyte was injected for infiltration for 4 h, to obtain a sodium-ion battery.

### Example 3-1

### 1. Preparation of positive electrode plate

A 12 µm thick aluminum foil was used as a positive electrode current collector.

A positive electrode active substance NaNi_{1/3}Co_{1/3}Mn_{1/3}O₂, a conductive agent Super P, and a binder polyvinylidene fluoride at a mass ratio of 96.2:2.7: 1.1 were added to N-methylpyrrolidone (NMP) to produce a positive electrode slurry. The positive electrode slurry was applied onto the current collector aluminum foil, and the resulting current collector was dried at 85°C, followed by cold pressing, trimming, cutting, slitting, and drying in vacuum at 85°C for 4 h, to obtain a positive electrode plate.

### 2. Preparation of negative electrode plate

An 8 µm thick copper foil was used as a negative electrode current collector.

### 3. Preparation of sodium-ion battery

The positive electrode plate, a polyethylene film, and the negative electrode plate were sequentially stacked so that the polyethylene film was located between the positive electrode plate and the negative electrode plate for separation. Then, the resulting stack was wound to obtain an electrode assembly. The electrode assembly was placed into an outer package shell and dried, methyl methacrylate MMA and an electrolyte (at a ratio of > 1:4) were injected, and a thermal initiator azobisisobutyronitrile AIBN was added to form an electrolyte system. The mixed electrolyte system was used to infiltrate the separator, followed by processes such as heat curing at > 50°C, vacuum sealing, standing, formation, and shaping, to obtain a sodium-ion battery.

### Example 3-2

Different from Example 3-1, the ion conductor used different materials, and the specific preparation steps of the sodium-ion battery were as follows: The positive electrode plate, a polyethylene film, and the negative electrode plate were sequentially stacked so that the polyethylene film was located between the positive electrode plate and the negative electrode plate for separation. Then, the resulting stack was wound to obtain an electrode assembly. The electrode assembly was placed into an outer package shell and dried, acrylonitrile AN and an electrolyte (at a ratio of > 1:4) were injected, and a thermal initiator azobisisobutyronitrile AIBN was added to form an electrolyte system. The mixed electrolyte system was used to infiltrate the separator, followed by processes such as heat curing at > 50°C, vacuum sealing, standing, formation, and shaping, to obtain a sodium-ion battery.

### Example 4

### 1. Preparation of positive electrode plate

A 12 µm thick aluminum foil was used as a positive electrode current collector.

A positive electrode active substance NaNi_{1/3}Co_{1/3}Mn_{1/3}O₂, a conductive agent Super P, and a binder polyvinylidene fluoride at a mass ratio of 96.2:2.7: 1.1 were added to N-methylpyrrolidone (NMP) to produce a positive electrode slurry. The positive electrode slurry was applied onto the current collector aluminum foil, and the resulting current collector was dried at 85°C, followed by cold pressing, trimming, cutting, slitting, and drying in vacuum at 85°C for 4 h, to obtain a positive electrode plate.

### 2. Preparation of negative electrode plate

An 8 µm thick copper foil was used as a negative electrode current collector.

### 3. Preparation of ion conductor (polyethylene oxide PEO-based solid electrolyte)

Polyethylene oxide PEO was dissolved in N,N-dimethylformamide DMF at a material-to-liquid ratio of 1:100 g/ml, and then mixed with a sodium salt at a molar ratio of ethylene oxide EO to Na⁺ being 10:1. The mixture was subjected to high-temperature drying at > 80°C for 12 h to obtain a PEO-based solid electrolyte.

### 4. Preparation of electrolyte

In an environment with a water content less than 10 ppm, non-aqueous organic solvents diethylene glycol dimethyl ether and triethylene glycol dimethyl ether were mixed at a volume ratio of 1:1 to obtain an electrolyte solvent, and then an electrolytic sodium salt sodium hexafluorophosphate and the mixed solvent were mixed to prepare an electrolyte with a sodium salt concentration of 1 mol/L.

### 5. Preparation of sodium-ion battery

The positive electrode plate, the ion conductor, and the negative electrode plate were sequentially stacked so that the ion conductor was located between the positive electrode plate and the negative electrode plate for separation. Then, the resulting stack was wound to obtain an electrode assembly. The electrode assembly was placed into an outer package shell and dried, and the electrolyte was then injected, followed by processes such as vacuum sealing, standing, formation, and shaping, to obtain a sodium-ion battery.

### Example 5

### 1. Preparation of positive electrode plate

A 12 µm thick aluminum foil was used as a positive electrode current collector.

A positive electrode active substance NaNi_{1/3}Co_{1/3}Mn_{1/3}O₂, a conductive agent Super P, and a binder polyvinylidene fluoride at a mass ratio of 96.2:2.7: 1.1 were added to N-methylpyrrolidone (NMP) to produce a positive electrode slurry. The positive electrode slurry was applied onto the current collector aluminum foil, and the resulting current collector was dried at 85°C, followed by cold pressing, trimming, cutting, slitting, and drying in vacuum at 85°C for 4 h, to obtain a positive electrode plate.

### 2. Preparation of negative electrode plate

An 8 µm thick copper foil was used as a negative electrode current collector.

### 3. Preparation of ion conductor (polyethylene oxide PEO-based solid electrolyte)

Polyethylene oxide PEO was dissolved in N,N-dimethylformamide DMF at a material-to-liquid ratio of 1:100 g/ml, and then mixed with a sodium salt at a molar ratio of ethylene oxide EO to Na⁺ being 10:1. The mixture was subjected to high-temperature drying at > 80°C for 12 h to obtain a PEO-based solid electrolyte.

### 4. Preparation of sodium-ion battery

The positive electrode plate, the ion conductor, and the negative electrode plate were sequentially stacked so that the ion conductor was located between the positive electrode plate and the negative electrode plate for separation. Then, the resulting stack was wound to obtain an electrode assembly. The electrode assembly was placed into an outer package shell, followed by processes such as vacuum sealing, standing, formation, and shaping, to obtain a sodium-ion battery.

### 5. Preparation of sodium-ion battery

The positive electrode plate, the ion conductor, and the negative electrode plate were sequentially stacked so that the ion conductor was located between the positive electrode plate and the negative electrode plate for separation. Then, the resulting stack was wound to obtain an electrode assembly. A mixed solution of polyvinylidene fluoride and silicon oxide was sprayed onto an end portion of the electrode assembly, and cured and dried to form an insulating structure. The electrode assembly was placed into an outer package shell, followed by processes such as vacuum sealing, standing, formation, and shaping, to obtain a sodium-ion battery.

The parameters of the examples and comparative examples are shown in Table 2.

### Test

### 1. Cycling performance test of sodium-ion battery

At 25°C, the prepared secondary battery was charged to a charge cut-off voltage of 4.4 V at a constant current of 0.33C, then charged to a current of 0.05C at a constant voltage, left standing for 5 min, and discharged to a discharge cut-off voltage of 2.8 V at a constant current of 0.33C. An initial capacity of the battery was recorded as C0. Then, the battery was charged according to the strategy in Table 4, and discharged at 0.33C. A discharge capacity Cn after each cycle was recorded until a cycling capacity retention rate (that is, Cn/C0 × 100%) was 80%, and the number of cycles was recorded. More cycles indicate better cycling performance of the secondary battery.

**Table 1**

| State of charge SOC of secondary battery | Charging rate (C) |
|---|---|
| 0-10% | 0.33 |
| 10%-20% | 5.2 |
| 20%-30% | 4.5 |
| 30%-40% | 4.2 |
| 40%-50% | 3.3 |
| 50%-60% | 2.6 |
| 60%-70% | 2.0 |
| 70%-80% | 1.5 |
| 80%-100% | 0.33 |

**Test result**

**Table 2**

| Item | Ion conductor | | | Insulating structure | Liquid electrolyte | Cycles corresponding to 80% capacity retention rate of sodium-ion battery |
|---|---|---|---|---|---|---|
| | Type | Material of polymer | Elastic modulus (GPa) | Material | | |
| Comparative Example 1 | / | / | / | / | With | 400 |
| Comparative Example 2 | Solid electrolyte | PVDF-HFP | 6.00 | / | None | 500 |
| Example 1-1 | Solid electrolyte | PEO | 1.00 | / | None | 900 |
| Example 1-2 | Solid electrolyte | PEO & PVDF composite | 2.00 | / | None | 800 |
| Example 1-3 | Solid electrolyte | PVDF | 5.00 | / | None | 550 |
| Example 2-1 | Gel electrolyte | PMMA | 0.10 | / | None | 1200 |
| Example 2-2 | Gel electrolyte | PAN | 2.00 | / | None | 900 |
| Example 3-1 | Supporting layer and conducting layer | Polyethylene film PMMA gel electrolyte | E₂ = 0.84 | / | None | 1300 |
| | | | E₁ = 0.10 | | | |
| Example 3-2 | Supporting layer and conducting layer | Polyethylene film PAN gel electrolyte | E₂ = 0.84 | / | None | 1200 |
| | | | E₁ = 2.0 | | | |
| Example 4 | Solid electrolyte | PEO | 1.00 | / | With | 950 |
| Example 5 | Solid electrolyte | PEO | 1.00 | PVDF & SiO₂ | None | 900 |

As shown in FIG. 2,

Comparative Example 1 uses a conventional liquid electrolyte. During charging of the sodium-ion battery, the sodium metal deposited on the surface of the negative electrode current collector is likely to be squeezed to the end portion of the negative electrode plate, which increases the risk of short-circuiting between the negative electrode plate and the positive electrode plate, resulting in poor safety performance of the sodium-ion battery.

Comparative Example 2 uses a solid polymer electrolyte. Sodium ions migrate to the surface of the negative electrode current collector through the solid polymer electrolyte and deposit as sodium metal. Because the elastic modulus of such solid polymer electrolyte is relatively high and greater than 5.0 GPa, as the amount of the deposited sodium metal increases, the sodium metal is still squeezed to the end portion of the negative electrode plate, which causes short-circuiting between the negative electrode plate and the positive electrode plate, resulting in poor cycling performance.

The ion conductor disposed in the embodiments of this application can provide migration paths for sodium ions. In addition, the ion conductor has excellent elasticity, with an elastic modulus of 0.1 GPa to 5.0 GPa, which allows it to deform correspondingly in regions with increased precipitated sodium metal, reduces the risk of the sodium metal being squeezed out, and reduces the risk of short circuit caused by contact between the squeezed-out sodium metal and the positive electrode plate, thereby improving the safety performance of the sodium-ion battery and improving the cycling performance of the sodium-ion battery.

The inventors have found through experiments that the ion conductor can be used in various forms, such as a solid electrolyte, a gel electrolyte, and a composite form of a supporting layer and a conducting layer. Although the elastic moduli of these ion conductors differ slightly, they all have deformability, which can improve the safety performance. However, the extent to which the ion conductor improves the safety performance of the sodium-ion battery is still related to the range of the elastic modulus.

Although illustrative embodiments have been demonstrated and described, persons skilled in the art should understand that the foregoing embodiments should not be construed as any limitation on this application, and that the embodiments may be changed, replaced, and modified without departing from the spirit, principle, and scope of this application.

## Claims

1. A sodium-ion battery, comprising:
a positive electrode plate;
a negative electrode plate; and
an ion conductor located between the positive electrode plate and the negative electrode plate, wherein the ion conductor is at least in contact with a surface of the negative electrode plate, the ion conductor is configured to conduct sodium ions between the positive electrode plate and the negative electrode plate, and sodium ions conducted to the surface of the negative electrode plate are reduced to sodium metal,
wherein an elastic modulus of the ion conductor is E in GPa, wherein 0.10 ≤ E ≤ 5.00.

2. The sodium-ion battery according to claim 1, wherein 1.00 ≤ E ≤ 5.00;
optionally,
the ion conductor comprises a continuously disposed matrix, and material of the matrix comprises one or more of polyether compound, polyacrylonitrile, polyacrylate compound, and fluoropolymer; and
further optionally,
the polyether compound comprises one or more of polyethylene oxide and polypropylene oxide;
the polyacrylate compound comprises one or more of polymethacrylate, polyethyl acrylate, and polyhydroxymethacrylate; and
the fluoropolymer comprises polyvinylidene fluoride.

3. The sodium-ion battery according to claim 1, wherein 0.10 ≤ E ≤ 2.00;
optionally,
the ion conductor comprises a continuously disposed matrix and a plasticizer located in the matrix; optionally, material of the matrix comprises one or more of polyether compound, polyacrylonitrile, polyacrylate compound, and fluoropolymer; and
further optionally,
the polyether compound comprises one or more of polyethylene oxide and polypropylene oxide;
the polyacrylate compound comprises one or more of polymethacrylate, polyethyl acrylate, and polyhydroxymethacrylate;
the fluoropolymer comprises one or more of polyvinylidene fluoride and vinylidene fluoride-hexafluoropropylene copolymer; and/or
the plasticizer comprises one or more of dimethylformamide, diethyl carbonate, γ-butyrolactone, ethylene carbonate, propylene carbonate, and polyethylene glycol.

4. The sodium-ion battery according to claim 1, wherein the ion conductor comprises a supporting layer and a conducting layer, the conducting layer is located on a surface of the supporting layer, and the conducting layer is disposed on the surface of the negative electrode plate, wherein an elastic modulus of the conducting layer is E₁ in GPa, and an elastic modulus of the supporting layer is E₂ in GPa;
wherein E₁/E₂ < 1.

5. The sodium-ion battery according to claim 4, wherein 0.10 ≤ E₁ ≤ 2.00; and
optionally, the conducting layer comprises a polymer matrix; and further optionally, the polymer matrix comprises one or more of polyether compound, polyacrylonitrile, polyacrylate compound, and fluoropolymer.

6. The sodium-ion battery according to claim 4 or 5, wherein 0.50 ≤ E₂ ≤ 6.00; and optionally, 0.50 ≤ E₂ ≤ 3.00; and
optionally, material of the supporting layer comprises one or more of polyolefin-based resin film, glass fiber, and non-woven fabric.

7. The sodium-ion battery according to any one of claims 1 to 6, wherein the sodium-ion battery further comprises an insulating structure, the insulating structure is disposed on at least one side of the ion conductor in a height direction of the sodium-ion battery, and the insulating structure extends along a direction perpendicular to the height direction and extends to the surface of the negative electrode plate.

8. The sodium-ion battery according to claim 7, wherein the insulating structure is disposed on two sides of the ion conductor in the height direction.

9. The sodium-ion battery according to claim 7 or 8, wherein the insulating structure covers at least a portion of the positive electrode plate in the height direction.

10. The sodium-ion battery according to any one of claims 7 to 9, wherein the positive electrode plate comprises a positive electrode current collector and a positive electrode active substance layer disposed on at least one surface of the positive electrode current collector, the positive electrode active substance layer comprises a positive electrode active substance, and the insulating structure covers the positive electrode active substance layer in the height direction.

11. The sodium-ion battery according to any one of claims 7 to 10, wherein the insulating structure is configured to conduct the sodium ions between the positive electrode plate and the negative electrode plate, and the sodium ions conducted to the surface of the negative electrode plate are reduced to sodium metal.

12. The sodium-ion battery according to any one of claims 1 to 11, wherein the negative electrode plate comprises a negative electrode current collector, and a surface of the negative electrode current collector is in contact with the ion conductor.

13. The sodium-ion battery according to any one of claims 1 to 12, wherein the negative electrode plate comprises a negative electrode current collector and a conductive layer disposed on at least one surface of the negative electrode current collector, a surface of the conductive layer is in contact with the ion conductor, and the conductive layer is configured to receive sodium ions such that the sodium ions are reduced to sodium metal.

14. A battery, comprising the sodium-ion battery according to any one of claims 1 to 13.

15. An electric apparatus, comprising the battery according to claim 14.
